# EUROPEAN PATENT APPLICATION

(11) **EP 2 647 890 A2**
(43) Date of publication of application: **09.10.2013**
(21) Application number: 13001709.8
(22) Date of filing: 04.04.2013
(51) Int. Cl.: F16J 15/32

(54) **Absorber Seal**

(30) Priority: 05.04.2012 JP 2012086036
(71) Applicant: Carl Freudenberg KG, 69469 Weinheim (DE)
(72) Inventor: Mashimo, Takashi, Fukushima-shi, Fukushima, 9601102 (JP)

(57) **Abstract**

To lower costs by reducing the number of assembly man-hours and reducing the number of components, for example, without causing the pressure resistance and durability to deteriorate.

Absorber seal comprising an oil seal which is provided integrally on the inner circumferential side of a flat washer-shaped first annular member made of metal and retained on a housing side and which has an oil lip which is in hermetic sealing contact with the outer circumferential surface of a reciprocating shaft, and a dust seal which is located to the outside in the axial direction of the abovementioned oil seal, is provided integrally on the inner circumferential side of a flat washer-shaped second annular member made of metal and retained on the abovementioned housing side, and has a dust lip which is in hermetic sealing contact with the outer circumferential surface of the abovementioned reciprocating shaft, characterised in that the inner circumferential side of the second annular member to which the abovementioned dust lip is attached is a planar surface, and in that the abovementioned first annular member is provided integrally at the location at which the abovementioned oil lip is attached with an annular projecting portion which protrudes toward the inside in the axial direction and which has an outer surface the cross section of which is arc-shaped.

## Description

The present invention relates to an absorber seal, and more specifically relates to an absorber seal used in a rod seal portion of a shock absorber.

### [Background art]

As the places and ways in which automobiles are used have become more diverse in recent years, so the environments in which shock absorbers are used and the conditions under which they are used have become increasingly harsh.
For this reason it is becoming increasingly necessary for shock absorber seals of a type having a high (1MPa or more) assembly sealing pressure to be designed taking into account pressure resistance and durability, in order to prevent the oil seal lip from becoming damaged due to pressure (bursting).

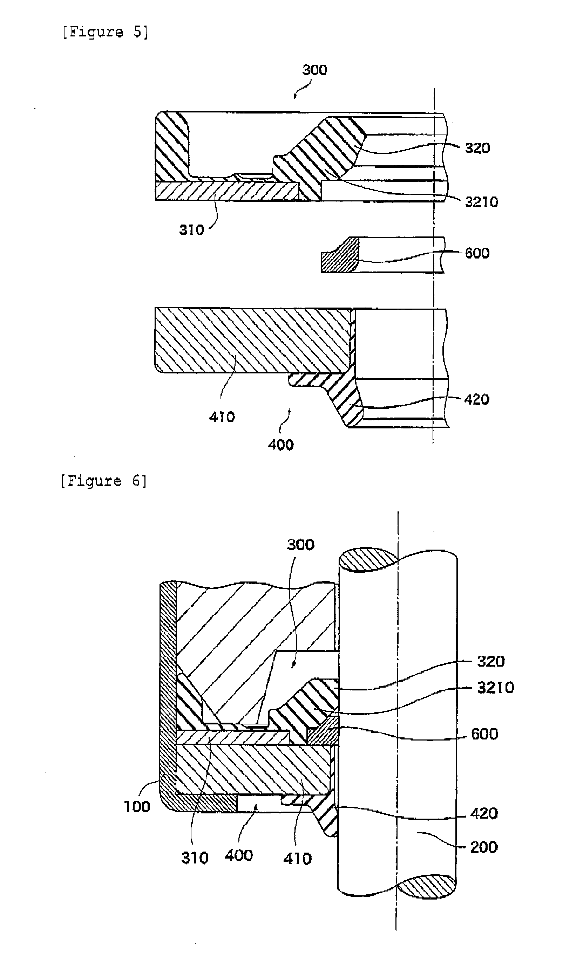

To this end, absorber seals of the type illustrated in Figure 5 and Figure 6 have been proposed as means for enhancing the pressure resistance and durability of the oil seal. (Patent literature article 1)
Figure 6 is a diagram illustrating a state in which the absorber seal consisting of the three members illustrated in Figure 5 has been assembled in a shock absorber.

This type of absorber seal hermetically seals an annular void between a housing 100 and a reciprocating shaft 200 which are assembled in such a way that they are capable of mutual concentric reciprocation, and consists of an oil seal 300 which is provided integrally on the inner circumferential side of a first annular member 310 retained on the housing 100 side and which has an oil lip 320 which is in hermetic sealing contact with the outer circumferential surface of the reciprocating shaft 200, a dust seal 400 which is located to the outside (the downward direction in the drawings) of the oil seal 300, is provided integrally on the inner circumferential side of a second annular member 410 retained on the housing 100 side, and has a dust lip 420 which is in hermetic sealing contact with the outer circumferential surface of the reciprocating shaft 200, and a backup ring 600 which is located on the inner circumferential side between the oil seal 300 and the dust seal 400 and which supports a lumbar portion 3210 of the oil lip 320.

This type of absorber seal certainly enhances pressure resistance and durability, but it also causes problems in that there are three components, and manufacturing and assembly costs increase.
In particular, because this type of absorber seal comprises three members, assembly is difficult resulting in the problem that the backup ring 600 may be forgotten during assembly.

To this end, the absorber seal illustrated in Figure 7 and Figure 8 has been proposed as an absorber seal in which this point is improved. (Patent literature article 2)

This type of absorber seal hermetically seals an annular void between a housing 100 and a reciprocating shaft 200 which are assembled in such a way that they are capable of mutual concentric reciprocation, and consists of an oil seal 300 which is provided integrally on the inner circumferential side of a first annular member 310 retained on the housing 100 side and which has an oil lip 320 which is in hermetic sealing contact with the outer circumferential surface of the reciprocating shaft 200, and a dust seal 400 which is located to the outside in the axial direction (the unsealed side in the downward direction in the drawings) of the oil seal 300, is provided integrally on the inner circumferential side of a second annular member 410 retained on the housing 100 side, and has a dust lip 420 which is in hermetic sealing contact with the outer circumferential surface of the reciprocating shaft 200.
Further, an inner circumferential portion side of the second annular member 410 serves the function of backup means 411 for the oil lip 320.

Specifically, the backup means 411 have an inclined surface 4111 which extends toward the oil lip 320 side, and the configuration is such that a lumbar portion 321 of the oil lip 320 is supported by the inclined surface 4111.

However, this type of absorber seal has a construction in which the dust lip 420 is bonded to the reverse side of an inclined section of the second annular member 410, and this gives rise to the problem that it is difficult to mould the lip on the dust lip 420 side.
To elaborate, when performing die moulding, intimate contact must be achieved with the die at the inclined section of the second annular member 410, and it is therefore difficult to maintain a stable state of intimate contact, and the generation of rubber burrs is unavoidable.

Moreover, the lumbar portion 321 of the oil lip 320 is not bonded to the inclined surface 4111 of the second annular member 410.
Thus because the shape inevitably differs between lots, and because the shape of the oil lip 320 after deformation varies and the state of contact between the oil lip 320 and the reciprocating shaft 200 also varies, instability in the contact surface pressure distribution of the oil lip 320 in relation to the outer circumferential surface of the reciprocating shaft 200 cannot be avoided.
It is thus also difficult with this type of absorber seal to obtain an absorber seal which has stable quality and performance.

Further, the absorber seal illustrated in Figure 9 has also been proposed. (Prior art in patent literature article 2) To elaborate, this type of absorber seal has a configuration consisting of an oil lip 320 which is provided integrally on the inner circumferential side of an annular member 410 and which is in hermetic sealing contact with the outer circumferential surface of a reciprocating shaft, and a dust lip 420 which is located to the outside in the axial direction (the unsealed side in the downward direction in the drawing) of the oil lip 320, is provided integrally on the inner circumferential side of the annular member 410, and is in hermetic sealing contact with the outer circumferential surface of the reciprocating shaft.

However, a rubber flow path 500 must be provided on the inner circumferential surface of the annular member 410 in order to mould the oil lip 320 and the dust lip 420 integrally, and there is thus a limit to the degree to which the gap between the inner circumferential surface of the annular member 410 and the outer circumferential surface of the reciprocating shaft can be minimised.
The degree to which the pressure resistance performance of this type of absorber seal can be increased is thus limited.

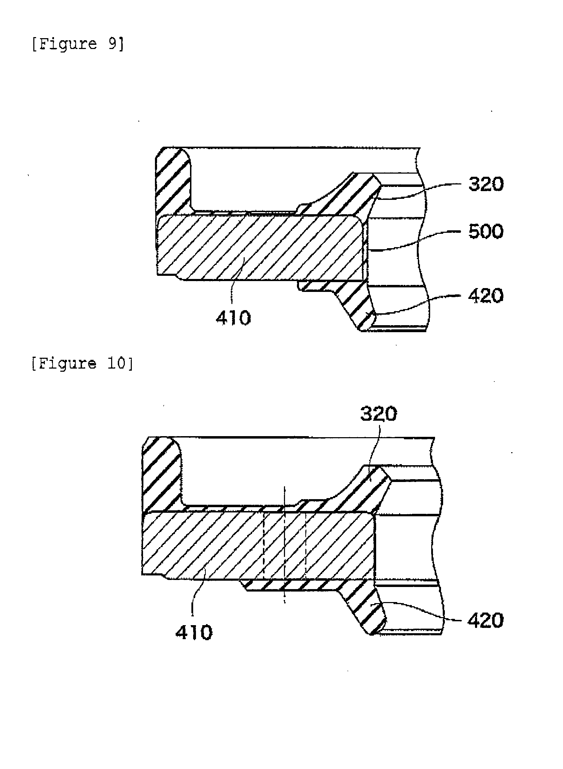

To this end, the absorber seal illustrated in Figure 10 has been proposed.
To elaborate, the rubber flow path 500 illustrated in Figure 9, provided in order to mould the oil lip 320 and the dust lip 420 integrally, is achieved by means of through holes 510 provided in the annular member 410, allowing the gap between the inner circumferential surface of the annular member 410 and the outer circumferential surface of the reciprocating shaft to be minimised.

However, provision of the through holes 510 causes problems in that the manufacturing cost increases and the locations in which the through holes 510 have been formed deform and protrude outward (to the lower side in the drawing) under high pressure.

### [Prior art literature]

### [Patent literature]

[Patent literature article 1] Japanese Patent Kokai 2005-90569
[Patent literature article 2] Japanese Patent Kokai 2010-223410

### [Summary of the invention]

### [Problems to be resolved by the invention]

The objective of the absorber seal of the present invention is to lower costs by reducing the number of assembly man-hours and reducing the number of components, for example, without causing the pressure resistance and durability to deteriorate.

### [Means of overcoming the problem]

The absorber seal of the present invention is an absorber seal which hermetically seals an annular void between a housing and a reciprocating shaft which are assembled in such a way that they are capable of mutual concentric reciprocation, and which comprises an oil seal which is provided integrally on the inner circumferential side of a flat washer-shaped first annular member made of metal and retained on the abovementioned housing side and which has an oil lip which is in hermetic sealing contact with the outer circumferential surface of the abovementioned reciprocating shaft, and a dust seal which is located to the outside in the axial direction (the unsealed side) of the abovementioned oil seal, is provided integrally on the inner circumferential side of a flat washer-shaped second annular member made of metal and retained on the abovementioned housing side, and has a dust lip which is in hermetic sealing contact with the outer circumferential surface of the abovementioned reciprocating shaft, **characterised in that** the inner circumferential side of the second annular member to which the abovementioned dust lip is attached is a planar surface, and in that the abovementioned first annular member is provided integrally at the location at which the abovementioned oil lip is attached with an annular projecting portion which protrudes toward the inside in the axial direction and which has an outer surface the cross section of which is arc-shaped.

### [Advantages of the invention]

The present invention exhibits advantages such as those described hereinbelow.
According to the absorber seal of the invention recited in Claim 1, the configuration is such that the first annular member is provided integrally at the location at which the dust lip is attached with an annular projecting portion which protrudes toward the inside in the axial direction and which has an outer surface the cross section of which is arc-shaped, and it is therefore possible to lower costs by reducing the number of assembly man-hours and reducing the number of components, for example, without causing the pressure resistance and durability to deteriorate.
Also, according to the absorber seal of the invention recited in Claim 2, the inner circumferential surface of the first annular member faces the outer circumferential surface of the reciprocating shaft across a very small gap, and thus damage to the oil lip due to high pressure can be avoided effectively.

Also according to the absorber seal of the invention recited in Claim 3, an annular gasket which comes into hermetic sealing contact with the first annular member is provided on the inner circumferential side of the second annular member on the surface which comes into contact with the first annular member, and it is thus possible to avoid the problem whereby hydrostatic pressure accumulates in the gap between the oil lip and the dust lip causing the contact pressure between the oil lip and the dust lip to deteriorate, and thus stable hermetic sealing performance can be maintained.
Moreover, according to the absorber seal of the invention recited in Claim 4, the absorber seal can be manufactured inexpensively without causing the pressure resistance and durability of the absorber seal to deteriorate.

### [Brief explanation of the figures]

[Figure 1] is a half cross-sectional view of a state in which the oil seal and the dust seal are separate, prior to assembly of the absorber seal according to the present invention.
[Figure 2] is a diagram in which the oil seal and the dust seal in Figure 1 have been overlaid.
[Figure 3] is a half cross-sectional view of a state in which the absorber seal in Figure 2 has been assembled.
[Figure 4] is a diagram illustrating in the same way as in Figure 1 another embodiment of the absorber seal according to the present invention.
[Figure 5] is a half cross-sectional view of a state in which the components are separate, prior to assembly of an absorber seal according to the prior art.
[Figure 6] is a half cross-sectional view of a state in which the absorber seal in Figure 5 has been assembled.

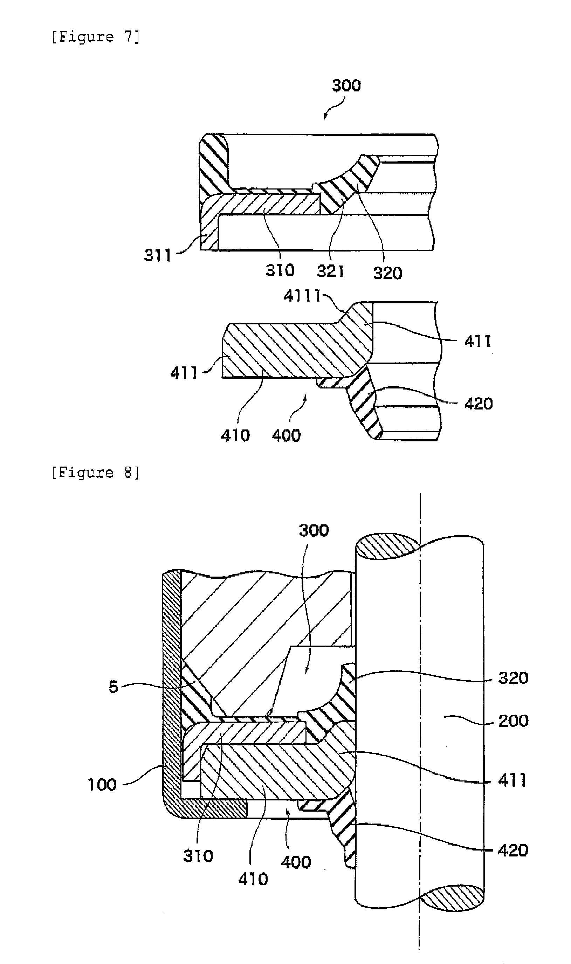

[Figure 7] is a half cross-sectional view of a state in which the components are separate, prior to assembly of another absorber seal according to the prior art.
[Figure 8] is a half cross-sectional view of a state in which the absorber seal in Figure 7 has been assembled.
[Figure 9] is a half cross-sectional view prior to assembly of yet another absorber seal according to the prior art.
[Figure 10] is a half cross-sectional view prior to assembly of an improved absorber seal according to the prior art.

### [Modes of embodying the invention]

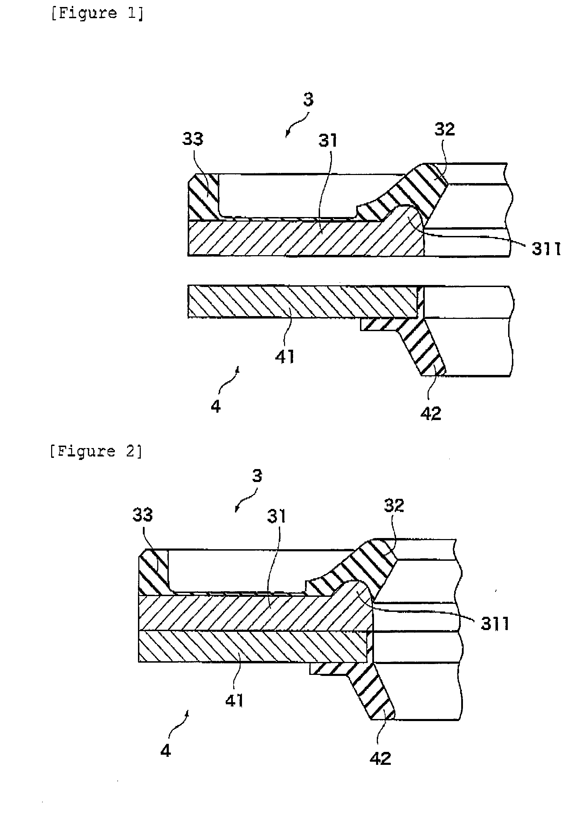

Optimum modes of embodying the present invention will now be described based on Figure 1 to Figure 3.

In the drawings, the absorber seal according to the present invention hermetically seals an annular void between a housing 1 and a reciprocating shaft 2 which are assembled in such a way that they are capable of mutual concentric reciprocation, and consists of an oil seal 3 which is provided integrally on the inner circumferential side of a flat washer-shaped first annular member 31 made of metal and retained on the housing 1 side and which has an oil lip 32 which is in hermetic sealing contact with the outer circumferential surface of the reciprocating shaft 2, and a dust seal 4 which is located to the outside in the axial direction (the unsealed side in the downward direction in the drawings) of the oil seal 3, is provided integrally on the inner circumferential side of a flat washer-shaped second annular member 41 made of metal and retained on the housing 1 side, and has a dust lip 42 which is in hermetic sealing contact with the outer circumferential surface of the reciprocating shaft 2.

Further, the inner circumferential side of the second annular member 41 to which the dust lip 42 is attached is a planar surface, and the first annular member 31 is provided integrally at the location at which the oil lip 32 is attached with an annular projecting portion 311 which protrudes toward the inside in the axial direction and which has an outer surface the cross section of which is arc-shaped.

Such a configuration makes it possible to lower costs by reducing the number of assembly man-hours and reducing the number of components, for example, without causing the pressure resistance and durability to deteriorate.
In other words, because the oil lip 32 is attached (bonded) to an annular projecting portion 311 of the first annular member 31 which has an arc-shaped outer surface and which protrudes to the inside in the axial direction (the high-pressure side in the upward direction in the drawings), the bonding strength between the annular projecting portion 311 and the oil lip 32 is strong and the annular projecting portion 311 serves the function of supporting the force due to high pressure pressing the oil lip 32 onto the outer circumferential surface of the reciprocating shaft 2, and therefore deformation of the oil lip 32 under high pressure can be inhibited, and as a result satisfactory pressure resistance performance can be exhibited.

Further, the mode of embodiment consists of two members namely the oil seal 3 and the dust seal 4, and it is therefore not necessary to provide a rubber flow path on the inner circumferential surface of the first annular member 31 in order to link the oil lip 32 and the dust lip 42, and the inner circumferential surface of the first annular member 31 can thus be allowed to face the outer circumferential surface of the reciprocating shaft 2 across a very small gap such that it is almost in contact therewith.
Thus adequate pressure resistance performance can be ensured without using a backup ring.

Further, an outer circumferential gasket 33 is formed protruding in the axial direction on the inside in the axial direction (the high-pressure side in the upward direction in the drawings) on the outer circumferential side of the first annular member 31, preventing high-pressure internal fluid leaking from gaps between the outer circumferential surface of the first annular member 31 and the inner circumferential surface of the housing 1.

The material used in the present invention for the oil lip 32 and the dust lip 42 can be selected as appropriate from various rubber-like resilient materials such as FKM, silicone rubber, EPDM, nitrile rubber, acrylic rubber, HNBR and the like.

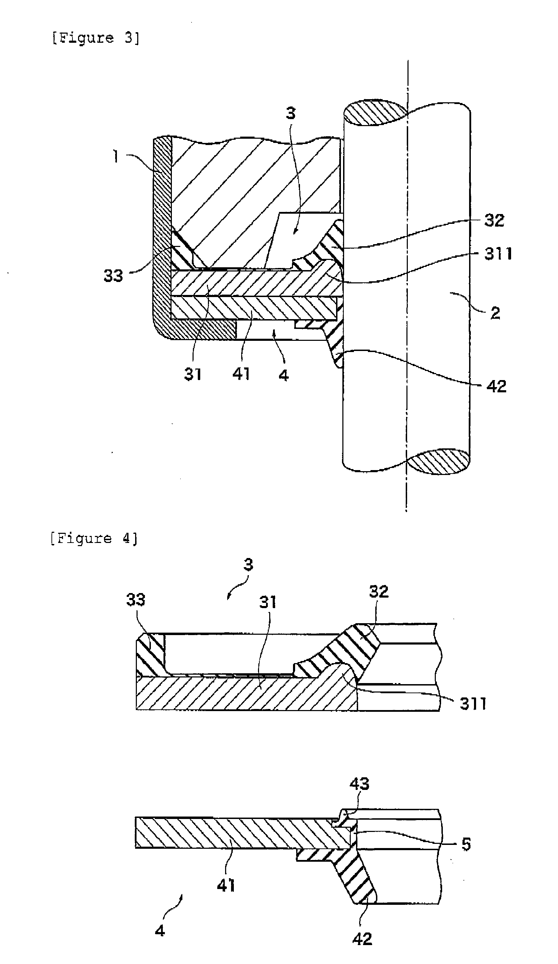

Another mode of embodying the invention will now be described based on Figure 4.
The point of difference with the embodiment described earlier is that an annular gasket 43 which comes into hermetic sealing contact with the first annular member 31 is provided on the inner circumferential side of the second annular member 41 on the surface which comes into contact with the first annular member 31.

By means of such a configuration, if the function of the outer circumferential gasket 33 has deteriorated, high-pressure internal fluid which leaks out from gaps between the outer circumferential surface of the first annular member 31 and the inner circumferential surface of the housing 1 and passes though the gap between the first annular member 31 and the second annular member 41 is prevented from infiltrating into the gap between the oil lip 32 and the dust lip 42 by the gasket 43, and it is thus possible to avoid the problem whereby hydrostatic pressure accumulates causing the contact pressure between the oil lip 32 and the dust lip 42 to deteriorate, and thus stable hermetic sealing performance can be maintained.

Also, the gasket 43 is formed integrally with the dust lip 42.
Thus, although a rubber flow path 5 is formed on the inner circumferential surface of the second annular member 41, this does not affect the pressure resistance performance of the oil lip 32.

Also, it goes without saying that the present invention is not limited to the optimum modes of embodying the invention discussed hereinabove, and various other configurations may be adopted without deviating from the gist of the present invention.

### [Industrial applicability]

The present invention is beneficially used in an absorber seal used in a rod seal portion of a shock absorber.

## Claims

1. Absorber seal which hermetically seals an annular void between a housing (1) and a reciprocating shaft (2) which are assembled in such a way that they are capable of mutual concentric reciprocation, and which comprises an oil seal (3) which is provided integrally on the inner circumferential side of a flat washer-shaped first annular member (31) made of metal and retained on the abovementioned housing (1) side and which has an oil lip (32) which is in hermetic sealing contact with the outer circumferential surface of the abovementioned reciprocating shaft (2), and a dust seal (4) which is located to the outside in the axial direction of the abovementioned oil seal (3), is provided integrally on the inner circumferential side of a flat washer-shaped second annular member (41) made of metal and retained on the abovementioned housing (1) side, and has a dust lip (42) which is in hermetic sealing contact with the outer circumferential surface of the abovementioned reciprocating shaft (2), **characterised in that** the inner circumferential side of the second annular member (41) to which the abovementioned dust lip (42) is attached is a planar surface, and **in that** the abovementioned first annular member (31) is provided integrally at the location at which the abovementioned oil lip (32) is attached with an annular projecting portion (311) which protrudes toward the inside in the axial direction and which has an outer surface the cross section of which is arc-shaped.

2. Absorber seal according to Claim 1, **characterised in that** the inner circumferential surface of the abovementioned first annular member (31) faces the outer circumferential surface of the abovementioned reciprocating shaft (2) across a very small gap.

3. Absorber seal according to Claim 1 or Claim 2, **characterised in that** an annular gasket (43) which comes into hermetic sealing contact with the abovementioned first annular member (31) is provided on the inner circumferential side of the abovementioned second annular member (41) on the surface which comes into contact with the abovementioned first annular member (31).

4. Absorber seal according to Claim 3, **characterised in that** the abovementioned gasket (43) is formed integrally with the abovementioned dust lip (42).
